# EUROPEAN PATENT SPECIFICATION

(11) **EP 3 849 205 B1**
(45) Date of publication and mention of the grant of the patent: **15.05.2024**
(21) Application number: 20151166.4
(22) Date of filing: 10.01.2020
(51) Int. Cl.: H04Q 11/00

(54) **AN OPTICAL LINE TERMINAL AND A PASSIVE OPTICAL NETWORK**
OPTISCHES LEITUNGSENDGERÄT UND PASSIVES OPTISCHES NETZWERK
TERMINAL DE LIGNE OPTIQUE ET RÉSEAU OPTIQUE PASSIF

(43) Date of publication of application: 14.07.2021
(73) Proprietor: Nokia Solutions and Networks Oy, 02610 Espoo (FI)
(72) Inventor: GOVINDASAMY, SATHISH KUMAR, 119968 Singapore (SG)
(74) Representative: IP HILLS NV

(56) References cited:
- EP-A1- 2 787 684
- EP-A1- 2 916 486

## Description

### Technical Field

Various example embodiments relate to an optical line terminal and a passive optical network.

### Background

In a Passive Optical Network, PON, an Optical Line Terminal, OLT, in a central office, CO, is coupled to multiple Optical Network Units, ONU, in respective optical endpoints via an Optical Distribution Network, ODN. The ODN typically has a tree and branch architecture and comprises optical fibres and passive splitters/combiners that split the optical signals in the downstream directions from the OLT to the ONUs, and, multiplexes the optical signals in the upstream direction from the ONUs to the OLT. In a simple example where a CO is connected to N optical endpoints, N being a positive integer number, the OLT at the CO is connected via an optical fibre (so-called feeder fibre), to a 1:N passive optical splitter which in turn is connected via N optical fibres (so called distribution fibres) to the N ONUs in the respective optical endpoints. The OLT of the PON is connected to an upstream aggregation, AGG, network, which in turn is connected to a core network.

To enable protection of the PON in case of a failure of the optical link, an additional OLT serving as a failover OLT is provided which is connected to the ONTs via the passive splitters/combiners and therefore forming an additional, a failover, optical link. Upon a failure of the operational active optical link, which may be due to a faulty OLT and/or a failure of the ODN, a switchover to the failover optical link is performed to restore communication in the PON.

A protected PON should maintain a fast and reliable communication between the OLT and ONUs, whether the active OLT, the OLT serving the active optical link, and the failover OLT, the OLT serving the failover optical link, are co-located in the same location or reside in geographically remote locations.

EP2916486A1 discloses a service protection method, an optical line terminal, and a system in a passive optical network and relate to the communications field, which not only implements service protection after a fault occurs on a working link between a first OLT and a switching device, but also implements service protection after a fault occurs on a second VLAN service channel, thereby ensuring normal access of service data, thereby ensuring normal access of service data. A specific solution is as follows: A second VLAN service channel is set between a second OLT and a switching device; when a fault occurs on an active link, the second OLT performs active/standby switchover, receives service data from an ONT, and sends the service data to the switching device through the second VLAN service channel. The present invention is applied in a process of dual-homing protection among network device nodes.

EP2787684A1 discloses a PON protection method and apparatus. A first transmission path is established between a first OLT and a far-end network node, and a second transmission path is established between a second OLT and the far-end network node. When it is found that a fault occurs on an optical path of the first OLT, a PON port corresponding to the optical path is switched to a corresponding PON port on the second OLT, and a fault notification is sent to the far-end network node. After receiving the fault notification, the far-end network node switches a data flow of the PON port corresponding to the optical path from the first transmission path to the second transmission path. In the present invention, transmission paths in active and standby protection are established to transmit an ONU service. When a fault occurs on an access optical path of an OLT, a PON port of an OLT, or a transmission path between an OLT and a far-end network node, a service can be switched to a corresponding backup path in time, thereby reducing complexity of configuration and management of a network.

### Summary

Amongst others, it is an object of embodiments of the present disclosure to provide a seamless switchover in a such protected PON connected to an AGG network.

The scope of protection sought for various embodiments of the present disclosure is set out by the independent claims.

The embodiments and features described in this specification that do not fall within the scope of the independent claims, if any, are to be interpreted as examples useful for understanding various embodiments of the present disclosure.

This object is achieved, according to a first example aspect of the present disclosure, by an optical line terminal according to claim 1.

In case of failure of the active link between the OLT and the ONUs, due to a faulty OLT and/or a failure of the ODN, it is required to restore swiftly the communication traffic in the PON so that minimal service interruption time is ensured. The active OLT may be providing network services, such as business services (e.g. Ethernet Private Line, E-LAN) or residential triple play services. However, for the traffic to resume over the failover optical link, the failover OLT should be aware of the network services provided by the active OLT. In addition, as the topology of the network may change over time, for example, an ONU may be added or removed from the network, the failover OLT should also maintain updated information relating to the status of the PON. This information for example corresponds to the instances of the one or more network services provided by the active OLT. Typically, these instances are referred to as service instances. During normal operation of the PON, the active OLT will synchronize all information relating to service instances to the failover OLT and the AGG network, so that upon a failure of the active link the information required for a seamless switchover is already available at the failover OLT and the AGG network. In case of receipt of a failure, the failover OLT will retrieve the service instance associated to the failed network services provided by the active link. Acquiring such information when switching-over from active to failover link, is a time-consuming process.

Similarly, upon switchover, the downstream traffic from the aggregation AGG network should be directed towards the failover link, i.e. towards the failover OLT, as well. This requires that the AGG network is aware of the switchover in the protected PON. The aggregation network needs to be aware of the service instances that are impacted due to switchover so as to update its local switching information. Thus, by sending, to the AGG network, the service instances corresponding to the network services provided by the active OLT together with a control message comprising a command that triggers the deletion of the switching information in the AGG network associated to the one or more service instances in the AGG network. The aggregation network once all the switching information is deleted for the impacted service instance the traffic would resume and all the switching information of current active traffic stream is relearnt on the new path.

In some embodiments, the service instances and the control message may be sent by the failover OLT. Upon deletion of the switching information corresponding to the received service instances in the AGG network, the AGG network becomes aware of the switchover in the protected PON, and, the AGG network resumes upstream traffic towards the PON via the failover OLT. Further, as the switching information is sent by the failover OLT, the AGG network knows that traffic needs to be directed towards the failover OLT.

In other embodiments, the service instances and the control message are sent by the active OLT. Upon deletion of the switching information corresponding to the received service instances in the AGG network, the AGG network becomes aware of the switchover in the protected PON, and, the AGG network resumes upstream traffic towards the PON via the failover OLT. AGG network would relearn the switching information on the new path based on the upstream traffic flow.

The switchover according to the present disclosure is thus orchestrated by the OLT rather than the ONUs. Furthermore, as all the information required by the AGG network to direct the traffic towards the failover link is provided by the OLT, i.e. be it the failover or the active OLT, upon a failure of the active link, it is not required to store any state information of the protected PON in the AGG network.

In example embodiments, the OLT further comprises a communication channel which is configured to connect to the other OLT so as to form a control link between the OLT and the other OLT, wherein the OLT prior to receiving the information, is configured to receive, via the control link, at least one or more active service instances corresponding to the one or more active network services provided by the active link.

The communication channel may be a logical link established via the AGG network or a direct physical connection between the OLTs. In the latter case, the OLTs are provided with an additional, interconnection port 112 and 122 respectively, via which the direct physical link is established.

By informing the failover OLT of the service instances provided by the active link and the switching information associated to these instances, the failover OLT is aware of the status of the PON and the network services provided by the active link. Thus, upon a switchover, the failover OLT can resume the network services on the failover link with minimal service interruption time thereby achieving a seamless switchover in the PON.

In example embodiments, the at least one memory of the OLT is configured to store the received active service instances and the associated switching information from the other OLT, and, the at least one processor is arranged to retrieve from the at least one memory the one or more service instances corresponding to the one or more failed network services.

Storing the received information in the memory of the failover OLT allows for a quick retrieval of the service instances provided by the active link. This guarantees a seamless switchover in the protected PON. The service instance information is used to indicate in the control message the impacted service instances.

The OLTs and the uplink connection to the AGG network may be running Ethernet Ring Protocol Switching, ERPS, or Multiprotocol Label Switching, MPLS, protocols. These protocols are defined in the ITU-T G.8032 and IETF/ITU-T standards, respectively. In the case of ERPS, the OLTs as well as the connection between the OLT to the AGG network may, thus, be controlled using a Layer 2 Control Protocol, L2CP. This allows, the OLT to be configured to communicate with the AGG network through the respective Control Protocol, which in case of ERPS will be R-APS message, and, in case of MPLS could be LDP or BGP event message.

By controlling the uplink connection towards the AGG network using the standard ERPS or MPLS control protocol messages, the network resumption (or convergence) of the upstream AGG network is decoupled and independent from the convergence of the PON link during failover. Therefore, a failure in the AGG network does not impact the traffic in the PON towards the ONUs, and, vice versa.

Further, this allows to support different type of network topologies between the OLTs and the AGG network. For example, the OLTs and the AGG network may be arranged in an open or closed ring topology, or, even a multi-ring topology.

Furthermore, each network service or a group of network services provided by the active link, are mapped to a Layer 2 instance. This avoids the need to have any mapping related to PON in the aggregation network, i.e. the aggregation network need not be aware of any PON interface specific information.

In example embodiments, the command comprised in the control message sent to the AGG network, will trigger flushing of the filtering database, FDB, of the corresponding Layer 2 service instances in the AGG network. By flushing the FDB in the AGG network, AGG network is notified of the switchover and at the same time direct the traffic towards the failover link according to the received service instances. Therefore, a seamless switchover is performed allowing the failed one or more network services to resume swiftly on the failover link with a minimal service interruption time.

In example embodiments, a standard compliant control message can be used to notify the AGG network of switchover. Therefore, no modifications are required in the AGG network. For example, when the protected PON, and therefore the OLT, operates according to at least an Ethernet Ring Protection Switching, ERPS, protocol, the message is a Ring Automatic Protection Switching, R-APS, control message. In case the protected PON, and therefore the OLT, operates according to at least a Multi-Protocol Label Switching, MPLS, protocol, the control message is a Label Distribution Protocol, LDP, or a Border Gateway Protocol, BGP, compliant message.

The use of a standard compliant message allows for a standardized switchover and it does not require any modification to the ONUs nor the AGG network. Furthermore, it is not required to maintain any state information related to the protected PON network neither at the AGG network.

In example embodiments, at least one processor is further arranged to issue a command for triggering a deletion of the switching information associated to the one or more service instances in the OLT. Once the switching information is deleted it will be relearnt again for all the current active streams from the upstream traffic.

In example embodiments, the AGG network is a protected AGG network. In this case, the AGG network may comprise an active and a failover AGG devices wherein the active link is serviced by the active AGG device and the failover link is serviced by the failover AGG device, and, wherein the OLT is configured to send to at least the active AGG device or to both AGG device the one or more service instances and the control message. In example embodiments, the OLT further comprises an additional network-side port, wherein the network-side port is configured to connect the OLT to the active AGG device, and, wherein the additional network-side port is configured to connect the OLT to the failover AGG device.

By notifying both the active and failover AGG devices, it is assured that the upstream AGG network is aware of the status of the PON. Therefore, in case of a failure in the active AGG device, the failover AGG device can perform a seamless switchover and direct the traffic to the OLT acting as active OLT.

The above defined object is also achieved, according to a second example aspect of the present disclosure, by an optical line terminal, OLT, according to claim 8.

The above defined object is also achieved, according to a third example aspect of the present disclosure, by a controller according to claim 12.

The controller is arranged to communicate with the OLTs and the AGG network. Different levels of switchover controls, such as a distributed control or a fully centralized control may be implemented. In a fully centralized approach, upon receipt of a failure of the active link, the controller is arranged to notify the failover OLT and the AGG network of the failure by sending to both the failover OLT (via an interconnection port) and the AGG network (via a network-side port), information on the impacted service instances and a control message comprising a command for triggering a deletion of a switching information associated to the one or more service instances in both the failover OLT and the AGG network, respectively.

According to a fourth and fifth example aspect a passive optical network according to claims 10 and 13 respectively is disclosed.

According to a further example aspect a method according to claim 11 is disclosed.

### Brief Description of the Drawings

Some example embodiments will now be described with reference to the accompanying drawings.
FIG.1 shows a protective PON employing an OLT according to example embodiments of the present disclosure;
FIG.2 shows a protective PON employing an OLT according to example embodiments of the present disclosure;
FIG.3 shows a protective PON employing an OLT according to example embodiments of the present disclosure;
FIG.4 shows a protective PON employing a controller according to example embodiments.
FIG.5A shows a flow chart showing steps for achieving a switchover from an active optical link to a passive optical link in a protective PON according to an example embodiment of the present disclosure;
FIG.5B shows a flow chart showing steps for achieving a switchover from an active optical link to a passive optical link in a protective PON according to an example embodiment of the present disclosure; and
FIG.6 shows an example embodiment of a suitable computing system for performing one or several steps in embodiments of the present disclosure.

### Detailed Description of Embodiment(s)

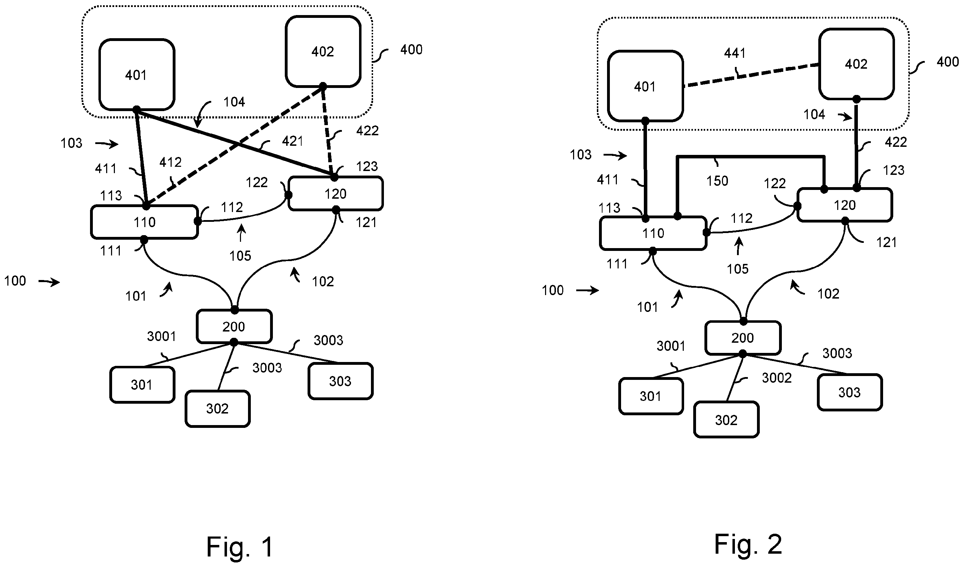

FIG.1 shows an example architecture of a PON 100 with protection which comprises an active OLT 110 and a failover OLT 120. This type of configuration is usually referred to as a duplex PON system. An example of such system is called type B protection, defined in the ITU-T standard G.984.1.

In order to explain embodiments of the present disclosure, it is assumed that the PON of FIG.1 is deployed and operating according to a certain standard or technology. It should be appreciated that the present disclosure described herein can be adapted to any type of PON including, but not limited to, a Broadband PON, BPON, an Ethernet PON, EPON, and a Gigabit PON, GPON, and others.

The OLTs may be running Ethernet Ring Protocol Switching, ERPS, or Multiprotocol Label Switching, MPLS, protocol. The ERPS protocol is defined in the ITU-T G.8032 standard. The MPLS protocol is defined in the IETF/ITU-T standard. The operation on the network side of the OLTs, i.e. between OLTs and an AGG network is, therefore, controlled using one of these control protocols.

As shown in FIG.1, the active OLT 110 is coupled via a PON port 111 to multiple, N, endpoints or ONUs, 301-303, via an optical distribution network, ODN. In this example, the OLT 110 is coupled to three endpoints. Similarly, the failover OLT 120 is coupled via a PON port 121 to the ONUs, 301-303, via the ODN. The ODN has a tree structure and thereto comprises an optical feeder fibre, a passive optical splitter/multiplexer 200, and N optical distribution fibres 3001-3003 or drop fibres that connect the splitter 200 to the respective ones of the ONUs 301-303. The splitter splits the incoming traffic to N ONUs 301-303. Such a splitter is referred to as a 2:N splitter.

An active optical link 101 is formed between the active OLT 110 and the ONUs 301-303, and, a failover optical link 102 is formed between the failover OLT 120 and the ONUs 301-303. In this example, N is equal to 3, however, N may for instance be 64, 128 or more. Typically, the OLT resides in a central office, CO, (not shown in the figure) which may host multiple OLTs, similar to OLT 110. In example embodiments, 8 or 16 OLTs may be integrated on the same shelf or rack. In further example embodiments, the OLTs 110 and 120 may be co-located on the same shelf or rack at the CO. Alternatively, they may reside in a different CO located in a geographically remote site.

Further, the OLTs 110 and 120 are each connected, via its respective network-side port 113 and 123 and a respective optical fibre 411 and 421 to an upstream aggregation, AGG, network 400. Two service channels are thus formed, an active service channel 103 between the active OLT 110 and the AGG network 400, and, another service channel 104 between the failover OLT 120 and the AGG network 400.

In case of a failure of the active link 101 caused by a failure in the active OLT or its respective feeder fibre, the active OLT alerts the failover OLT 120 of the failure of the active link and performs a failover - the active OLT disables its operation. Upon receipt of the failure information 511, the failover OLT becomes active 514 and the PON operation resumes over the failover link 102. Thus, traffic to and from ONUs 301-303 is sent through the respective distribution fibres 3001-3003 via the splitter 200 and the failover OLT 120. This is called a switchover in which the PON operation is switched from the active link to the failover link.

Typically, failure of the active link is detected by the active OLT itself. Alternatively, the failover OLT may be arranged to monitor the active link for failure.

Failure information may be sent by the active OLT 110 to the failover OLT 120 via a control link 105. The control link 105 may be an optical link between the two OLTs, i.e. a physical link. In this case, the OLTs 110 and 120 connect to each other via an additional port (i.e. via a respective interconnection port 112 and 122) and an additional optical fibre. Alternatively, the control link may be a virtual link. In such case, the information to the failover OLT 120 will be, for example, sent from the active OLT 110 through the AGG network 400 and to the failover OLT.

In addition to failure information, during normal operation of the PON and prior failure of the active link, the active OLT 110 is arranged to send, via the control link 105, to the failover OLT 120 information on at least the active service instances corresponding to the one or more network services provided by the active link. The service instances may comprise one or more Layer 2 services. Additionally, the active OLT may also send switching information associated to the active service instances. The switching information includes layer 2 VLAN service instance and all the layer 2 forwarding information like filtering database, DHCP/IGMP Snooping information required for layer 2 switching. The received information is then stored in the database of the failover OLT, i.e. the OLT is now in a hot standby mode. Thus, upon failure of the active link, the failover OLT 120 can take over the PON operation and the traffic to and from the ONUs 301-303 resumes over the failover link. This allows for a seamless switchover with a minimal service interruption time of the protected PON operation.

Similarly, the failure of the active link is communicated to the AGG network 400 as well so that the AGG network is notified of the switchover in the PON and directs the downstream traffic to the failover OLT 120. This is achieved by sending to the AGG network, the services instances corresponding to the network services provided by the active link 101 together with a control message comprising a command triggering a deletion of the switching information associated to these service instances in the AGG network. The control message is a standard compliant message which triggers flushing of the filtering database, FDB, of the corresponding service instances in the AGG network. This way downstream traffic from the AGG network to the ONUs resumes over the failover OLT 120.

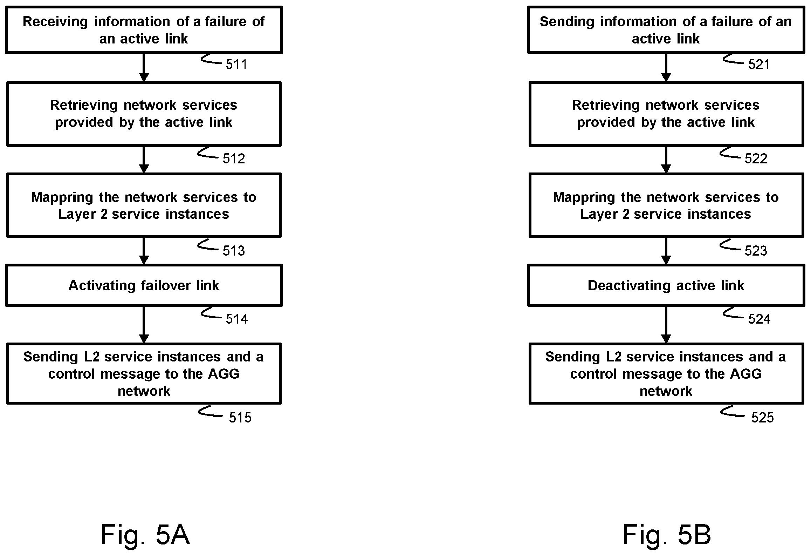

As described above, the OLTs may be running an ERPS or an MPLS protocol. The seamless switchover of the protected PON failover when controlled using an ERPS protocol will be explained below with reference to FIG.5A which shows a flowchart illustrating the steps performed by the failover OLT upon failure of the active link. The seamless switchover of the protected PON failover when controlled using MPLS protocol will be explained with reference to FIG.5B which shows a flowchart illustrating the steps performed by the active OLT upon failure of the active link.

In case the ERPS protocol is enabled between the OLTs and the AGG network 400, each of the service VLAN instance or group of service VLAN are mapped to an ERPS instance. The control message is a Ring Automatic Protection Switching, R-APS, control message and therefore complies with the standard version of the ERPS protocol based on ITU-T G.8032.

As described above, in this case, the notification towards the AGG network will be performed by the failover OLT. In this case, upon failure, the active OLT 110 alerts the failover OLT 120 and deactivates the active link. The failover OLT 120 in turn receives 511 information of a failure of the active link from the active OLT. Accordingly, the failover OLT retrieves 512 from its memory information on the network services provided by the active link. It then maps 513 the network services to one or more Layer 2 service instances, i.e. ERPS instances. It then activates 514 the failover link and finally, sends 515 the ERPS service instances together with a control message to the AGG network 400. As described above, the control message comprises a command that triggers flushing of the filtering database, FDB, of the corresponding ERPS service instances in the AGG network. By flushing the FDB in the AGG network, AGG network is notified of the switchover and at the same time it also relearns the switching information from the current active upstream traffic of all the impacted service instances flowing through the failover link. Therefore, a seamless switchover is performed allowing the failed one or more network services to resume swiftly on the failover link with a minimal service interruption time.

In case the MPLS protocol is enabled between OLTs and the AGG network, then it is required that the information and the control message are sent from the active OLT 110 to the AGG network 400 via service channel 103. In this case, Virtual Private LAN Service, VPLS, protocol with LDP or BGP based signalling is used to carry the control message. The message is a Label Distribution Protocol, LDP, or a Border Gateway Protocol, BGP, compliant control message, such as "flush-all-from-me" message. The control message complies with the standard version of the BGP or LDP protocol.

In this case, upon failure, the active OLT 110 alerts 521 the failover OLT 120 and deactivates the active link 524. Upon receipt of the failure notification, the failover OLT will performed the steps 511 to 514 as described above with reference to FIG.5A. At the same time, the active OLT 120 will retrieve 522 information on the network services provided by the active link. It then maps 523 the network services to one or more Layer 2 service instances. It then de-activates 524 the active link and finally, sends 525 the service instances together with a control message to the AGG network. As described above, the control message comprises a command that triggers flushing of the filtering database, FDB, of the corresponding layer 2 service instances in the AGG network. By flushing the FDB in the AGG network, AGG network is notified of the switchover and at the same time it also relearns the switching information from the current active upstream traffic of all the impacted service instances flowing through the failover link. Therefore, a seamless switchover is performed allowing the failed one or more network services to resume swiftly on the failover link with a minimal service interruption time.

In another example embodiment, the AGG network may be provided with a protection mechanism as shown in FIG. 1. In this case, the OLTs are connected to an AGG network in a dual homing topology, wherein the AGG network comprises an active AGG device 401 and a failover AGG device 402. The active OLT 110 is connected to active AGG device 401 via the network-side port 113 and link 411, and, to the failover AGG device 402 via an additional network-side port and link 412. Similarly, the failover OLT 120 is connected to AGG devices 401 and 402 via its network-side port 123 and link 421, and, its additional network side port and link 422, respectively. Four service channels are thus formed, i.e. two service channels between the OLTs and the active AGG device 401 and two additional service channels between the OLTs and the failover AGG device 402. Depending on the protocol the OLTs are running, upon a failure on the active link the respective OLT will, as described above, send to the active AGG device 401 the service instances and the control message so that network services resume over the failover link. Alternatively, the service instances and the control message may be sent to both AGG devices 401 and 402.

Another example of the OLTs connected to a protected AGG network using an open ring topology is shown in FIG.2. In this case, the active OLT 110 is connected to active AGG device 401 via its respective network-side port 113 and link 411, and, the failover OLT 120 is connected via its respective network-side port 123 and link 422 to the failover AGG device 402. The OLT 110 and 120 are connected to each other via a physical link 150. Similarly to above, four service channels are formed, i.e. two service channels between the active OLT and the AGG devices 401 and 402 and two service channels between the failover OLT and the AGG devices 401 and 402. The service channel between the active OLT and the active AGG device 401, i.e. the active service channel, is formed by a direct link, while the service channel between the active OLT and the failover AGG device 402, i.e. the failover service channel, is a virtual service channel where traffic to the failover AGG device 402 is routed through the failover OLT 120. Thus, in case of faulty AGG device 401 or a failure of link 411, traffic will be routed to the failover AGG device 402 via the failover OLT.

Alternatively, as shown in FIG.2, the AGG devices 401 and 402 may be connected to each other via link 441. In this case, the open ring topology is converted to a closed ring topology. Similarly, to the example with open ring topology of FIG.2, traffic between the active OLT 110 and the AGG devices 401 and 402 is routed via the direct link 411 or via the virtual link through the failover OLT 120 and the failover AGG device 402, respectively. Thus, is case of a faulty active AGG device 401, traffic will be routed to the failover AGG device 402 and through the failover OLT 120. However, in case of failure in the service channel 103, traffic may be routed to the active AGG device 401 through the failover OLT 120 and to the failover AGG device 402, or, through both the failover OLT 120 and failover AGG device 402 and to the active AGG device 401. This way traffic between the active OLT 120 and the active AGG device 401 can be routed through two different routes.

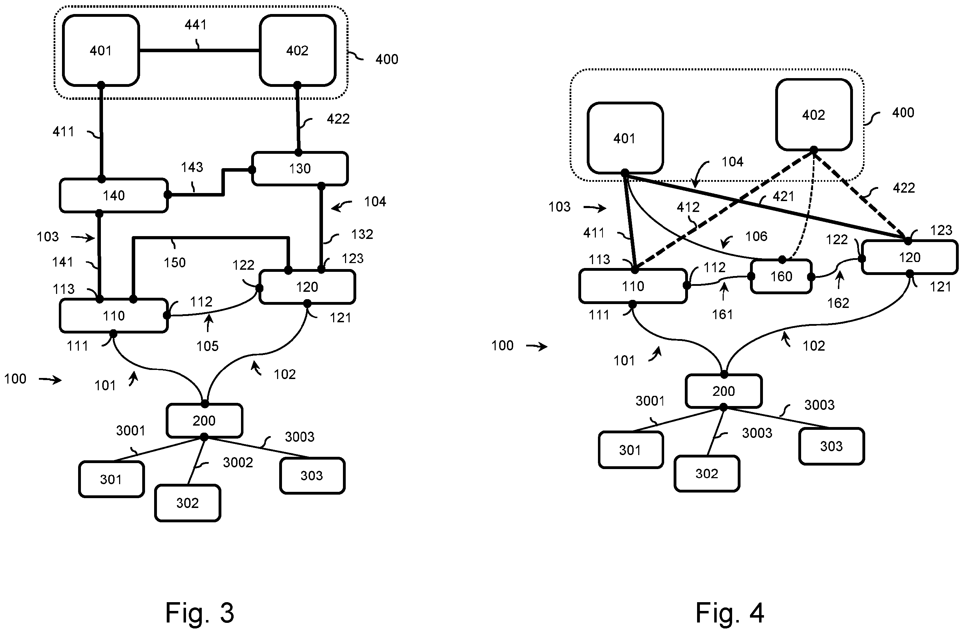

According to yet another example embodiment, the OLTs may be connected to a protected AGG network using a multi-ring topology as shown in FIG.3. The multi-ring topology comprises a sub-ring and a main ring. The sub-ring connects OLTs 110, 120, 130 and 140 to each other, while the main ring network connects OLTs 130 and 140 and AGG devices 401 and 402 to each other. In this configuration, there is no direct link between the active OLT 110 and the active AGG device 401. Similarly, there is no direct link the failover OLT 120 and the failover AGG device 402. Instead the traffic is routed via another OLT. For example, traffic from active OLT 110 to the active AGG device 401 may be routed through OLT 140 or through OLTs 120,130 and 140, or through OLTs 120, 130 and AGG device 402. Such configuration allows for a higher level of protection in the AGG network.

FIG.4 shows another example architecture of a PON 100 with protection a which comprises an active OLT 110, a failover OLT 120 and a controller 160. In such architecture the controller 160 acts as an intermediate between the active and failover OLTs and forwards all information (i.e. service instances, switching information and the failure alert) it receives from the active OLT to the failover OLT. Different levels of switchover controls, such as a distributed control or a fully centralized control may be implemented. A distributed control will be explained in detail below.

Similarly to FIG.1, the active OLT 110 is coupled via a PON port 111 to multiple, N, endpoints or ONUs, 301-303, via an optical distribution network, ODN. In this example, the OLT 110 is coupled to three endpoints. The failover OLT 120 is coupled via a PON port 121 to the ONUs, 301-303, via the ODN. The ODN has a tree structure and thereto comprises an optical feeder fibre, a passive optical splitter/multiplexer 200, and N optical distribution fibres 3001-3003 or drop fibres that connect the splitter 200 to the respective ones of the ONUs 301-303. The splitter splits the incoming traffic to N ONUs 301-303. Such a splitter is referred to as a 2:N splitter.

An active optical link 101 is formed between the active OLT 110 and the ONUs 301-303, and, a failover optical link 102 is formed between the failover OLT 120 and the ONUs 301-303. In this example, N is equal to 3, however, N may for instance be 64, 128 or more. Typically, the OLT resides in a central office, CO, (not shown in the figure) which may host multiple OLTs, similar to OLT 110. In example embodiments, 8 or 16 OLTs may be integrated on the same shelf or rack. In further example embodiments, the OLTs 110 and 120 may be co-located on the same shelf or rack at the CO. Alternatively, they may reside in a different CO located in a geographically remote site.

Further, the OLTs 110 and 120 are each connected, via its respective network-side port 113 and 123 and a respective optical fibre 411 and 421 to an upstream aggregation, AGG, network 400. Two service channels are thus formed, an active service channel 103 between the active OLT 110 and the AGG network 400, and, another service channel 104 between the failover OLT 120 and the AGG network 400.

The controller is connected to the OLTs 110 and 120 via a respective interconnection port. Two control links 161 and 162 are therefore formed, one control link between the controller 160 and the active OLT 110 and another control link between the controller 160 and the failover OLT 120.

In case of a failure of the active link 101 caused by a failure in the active OLT or its respective feeder fibre, the active OLT alerts a controller 160 and performs a failover - the active OLT disables its operation 524. The controller 160 forwards the failure alert to the failover OLT 120 of the failure of the active link. Upon receipt of the failure information 511, the failover OLT becomes active 514 and the PON operation resumes over the failover link 102. Thus, traffic to and from ONUs 301-303 is sent through the respective distribution fibres 3001-3003 via the splitter 200 and the failover OLT 120. This is called a switchover in which the PON operation is switched from the active link to the failover link.

Typically, failure of the active link is detected by the active OLT itself. Alternatively, the controller 160 may be arranged to monitor the active link for failure.

Failure information may be sent by the active OLT 110 to the controller 160 via a control link 161 and then forwarded by the controller 160 to the failover OLT 120 via a control link 162. The control links 161 and 162 may be an optical link, i.e. a physical link. In this case, the OLTs 110 and 120 connect to the controller 160 via an additional port (i.e. via a respective interconnection port 112 and 122) and an additional optical fibre. Alternatively, the control link may be a virtual link. In such case, the information to the failover OLT 120 will be, for example, sent from the active OLT 110 to the controller 160 through the AGG network 400, and, then forwarded by the controller 160 to the failover OLT 120 through the AGG network 400.

In addition to failure information, during normal operation of the PON and prior failure of the active link, the active OLT 110 is arranged to send, via the control link 161, to controller 160 information on at least the active service instances corresponding to the one or more network services provided by the active link. The service instances may comprise one or more Layer 2 services. Additionally, the active OLT may also send switching information associated to the active service instances. The switching information includes layer 2 VLAN service instance and all the layer 2 forwarding information like filtering database, DHCP/IGMP Snooping information required for layer 2 switching. The received information is then stored in the database of the controller. The active service instances corresponding to the one or more network services provided by the active link and the switching information are then forwarded by the controller to the failover OLT via the control link 162, i.e. the failover OLT is now in a hot standby mode. Thus, upon failure of the active link, the failover OLT 120 can take over the PON operation and the traffic to and from the ONUs 301-303 resumes over the failover link. This allows for a seamless switchover with a minimal service interruption time of the protected PON operation. Alternatively, the forwarding may be performed immediately upon reception or at a later stage after a certain period of time or upon receipt of the failure alert. In the latter two cases, the information will be retrieved by the database of the controller and forwarded to the failover OLT.

As described above, the OLTs may be running an ERPS or an MPLS protocol. The seamless switchover of the protected PON failover when controller using an ERPS and an MPLS protocol respectively will be explained below with reference to FIG.5A and FIG.5B to indicate which steps are performed by the OLTs and which by the controller. The seamless switchover of the protected PON failover when controlled using an ERPS protocol will be explained below with reference to FIG.5A. The seamless switchover of the protected PON failover when controlled using MPLS protocol will be explained with reference to FIG.5B.

In case the ERPS protocol is enabled between the OLTs and the AGG network 400, the failover OLT 120 maps each of the service VLAN instance or group of service VLAN to an ERPS instance and send a Ring Automatic Protection Switching, R-APS, control message compliant with the standard version of the ERPS protocol based on ITU-T G.8032 to the AGG network.

In this case, the notification towards the AGG network is performed by the failover OLT 120. In this case, upon failure, the active OLT 110 alerts the controller 160 and deactivates the active link. The controller 160 receives 511 information of a failure of the active link from the active OLT and notifies the failover OLT 120. On receipt of the failure alert 511, the failover OLT 120 retrieves 512 from its memory information on the network services provided by the active link. It then maps 513 the network services to one or more Layer 2 service instances, i.e. ERPS instances, sends 515 the ERPS service instances together with a control message to the AGG network 400. In addition to the above steps, the failover OLT activates 514 the failover link 102. As described above, the control message comprises a command that triggers flushing of the filtering database, FDB, of the corresponding ERPS service instances in the AGG network. By flushing the FDB in the AGG network, AGG network is notified of the switchover and at the same time it also relearns the switching information from the current active upstream traffic of all the impacted service instances flowing through the failover link. Therefore, a seamless switchover is performed allowing the failed one or more network services to resume swiftly on the failover link with a minimal service interruption time.

In case the MPLS protocol is enabled between OLTs and the AGG network, then it is required that the information and the control message are sent from the active OLT 110 to the AGG network 400 via service channel 103. In this case, Virtual Private LAN Service, VPLS, protocol with LDP or BGP based signalling is used to carry the control message. The message is a Label Distribution Protocol, LDP, or a Border Gateway Protocol, BGP, compliant control message, such as "flush-all-from-me" message. The control message complies with the standard version of the BGP or LDP protocol.

In this case, upon failure, the active OLT 110 alerts 521 the controller 160 and deactivates the active link 524. The controller forwards the failure alert to the failover OLT, which upon receipt of the failure notification, will performed the steps 511 to 514 as described above with reference to FIG.5A. At the same time, the active OLT 120 will retrieve 522 information on the network services provided by the active link. It then maps 523 the network services to one or more Layer 2 service instances. It then de-activates 524 the active link and finally, sends 525 the service instances together with a control message to the AGG network. As described above, the control message comprises a command that triggers flushing of the filtering database, FDB, of the corresponding layer 2 service instances in the AGG network. By flushing the FDB in the AGG network, AGG network is notified of the switchover and at the same time it also relearns the switching information from the current active upstream traffic of all the impacted service instances flowing through the failover link. Therefore, a seamless switchover is performed allowing the failed one or more network services to resume swiftly on the failover link with a minimal service interruption time.

A seamless switchover is performed, where the controller is arranged to communicate with the OLTs.

In comparison to the distributed control, in a fully centralized approach, upon receipt of a failure of the active link, the controller is arranged to notify the failover OLT of the failure by sending to the failover OLT the impacted service instances and the switching information. The controller, thus, retrieves the information on the impacted service instances and the switching information from its database and forwards it to the failover OLT. Upon receipt of the failure alert and the forwarded information, the failover OLT will activate the failover link and forward to the AGG network the impacted service instances and the switching information together with a control message comprising a command for triggering a deletion of a switching information associated to the one or more impacted service instances.

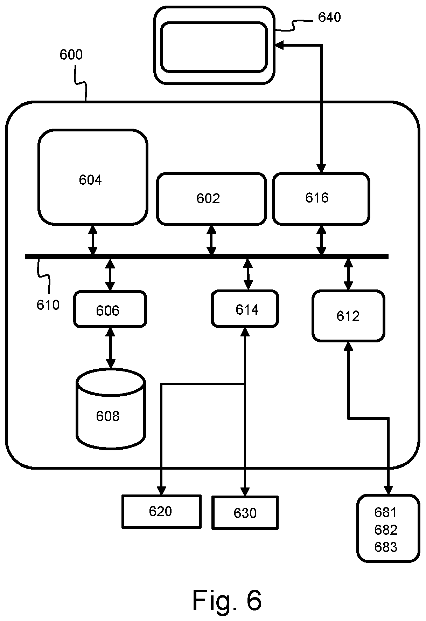

FIG.6 shows a computing system 600 suitable for performing various steps performed by an optical line terminal, OLT, configured to perform a protection in a passive optical network, PON, according to various embodiments of the present disclosure. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory, RAM, or another type of dynamic storage device that stores information and instructions for execution by processor 602 and/or a read only memory, ROM, or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network, LAN, or a wide area network, WAN, such as for example the internet. Storage element interface 606 may comprise a storage interface such as for example a Serial Advanced Technology Attachment, SATA, interface or a Small Computer System Interface, SCSI, for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, ... could be used.

According to the present disclosure, the communication interface 612 allows an OLT according various embodiments of the present disclosure to exchange for control information and data with another OLT, the AGG network or the ONUs. For example, according to the example embodiments, the processor may be running a computer program code which allows the OLT to operate as a failover OLT. For example, during normal operation the failover OLT may receive, via the communication interface 612, information from the active OLT relating to its service instances, the status of the PON, etc. The processor will then instruct the received information to be stored in the memory 604. Upon receipt of a failure information from the active OLT, the processor 602 will issue a control message and instruct retrieval of the service instances provided by the active OLT from the memory 604, followed by instruction to send the retrieved service instances together with the control message to the AGG network 400.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present disclosure has been illustrated by reference to specific embodiments, it will be apparent to those skilled in the art that the present disclosure is not limited to the details of the foregoing illustrative embodiments, and that the present disclosure may be embodied with various changes and modifications without departing from the scope thereof. The present embodiments are therefore to be considered in all respects as illustrative and not restrictive, the scope of the present disclosure being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the present disclosure are capable of operating according to the present disclosure in other sequences, or in orientations different from the one(s) described or illustrated above.
(ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present disclosure has been illustrated by reference to specific embodiments, it will be apparent to those skilled in the art that the present disclosure is not limited to the details of the foregoing illustrative embodiments, and that the present disclosure may be embodied with various changes and modifications without departing from the scope thereof. The present embodiments are therefore to be considered in all respects as illustrative and not restrictive, the scope of the present disclosure being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the present disclosure are capable of operating according to the present disclosure in other sequences, or in orientations different from the one(s) described or illustrated above.

## Claims

1. An optical line terminal, OLT, (120) comprising:
- a network-side port (123) configured to connect to an upstream aggregation, AGG, network (400), so as to form a service channel (104) between the OLT (120) and the AGG network (400);
- a passive optical network, PON, port (121), configured to connect to one or more optical network terminals, ONTs, (301-303), so as to form a failover link (102) between the ONTs (301-303) and the OLT (120); and
- at least one processor and at least one memory including a computer program code, the at least one memory and the computer program code configured to, with the at least one processor, cause the OLT (120) at least to perform:
- receive information of a failure of an active link (101) between the ONTs (301-303) and another OLT (110);
- retrieve one or more Layer 2 VLAN services, L2S corresponding to one or more failed network services provided by the active link;
- activate the failover link; and
- send, to the AGG network (400) via the network-side port (123), the one or more Layer 2 VLAN services and a control message comprising a command for triggering a deletion of a switching information associated to the one or more Layer 2 VLAN services in the AGG network (400);
and wherein the OLT (120) is configured to communicate with the AGG network (400) through a Layer 2 Standard Control Protocol, L2CP, and wherein the command triggers, in the AGG network (400), flushing of the filtering database, FDB, of the corresponding Layer 2 services, L2S so that the failed one or more network services resume on the failover link.

2. The optical line terminal according to claim 1, further comprising an interconnection port (122) configured to connect to the other OLT (110) so as to form a control link (105) between the OLT (120) and the other OLT (110), wherein the OLT prior to receiving the information, is configured to receive, via the control link (105), at least one or more active Layer 2 VLAN services corresponding to the one or more active network services provided by the active link (101) and a switching information associated to the one or more active Layer 2 VLAN services.

3. The optical line terminal according to claim 2, wherein the at least one memory is configured to store the received active Layer 2 VLAN services and the associated switching information from the other OLT (110), and wherein the at least one processor is arranged to retrieve from the at least one memory the one or more Layer 2 VLAN services corresponding to the one or more failed network services provided by the active link.

4. The optical line terminal according to claim 1, wherein the OLT (120) is configured to operate according to at least an Ethernet Ring Protection Switching, ERPS, protocol and wherein the message is a Ring Automatic Protection Switching, R-APS, control message.

5. The optical line terminal according one of preceding claims, wherein the at least one processor is further arranged to issue a command for triggering a deletion of the switching information associated to the one or more Layer 2 VLAN services in the OLT (120).

6. The optical line terminal according to one of preceding claims, wherein the AGG network (400) comprises an active and a failover AGG devices (401; 402) wherein the active link is serviced by the active AGG device (401) and the failover AGG device (402) , and, wherein the OLT (120) is configured to send to at least the active AGG device (401) or to both AGG device (401;402) the one or more Layer 2 VLAN services and the control message.

7. The optical line terminal according to claim 6, further comprising an additional network-side port, wherein the network-side port (123) is configured to connect the OLT (120) to the active AGG device (401), and, wherein the additional network-side port is configured to connect the OLT (120) to the failover AGG device (402).

8. An optical line terminal, OLT, (110) comprising:
- a network-side port (113) configured to connect to an upstream aggregation, AGG, network (400), so as to form a service channel (103) between the OLT (110) and the AGG network (400);
- a passive optical network, PON, port (111), configured to connect to one or more optical network terminals, ONTs, (301-303), so as to form an active link (101) between the ONTs (301-303) and the OLT (110); and
- at least one processor and at least one memory including a computer program code, the at least one memory and the computer program code configured to, with the at least one processor, cause the OLT (110) at least to perform:
- sent information of a failure of an active link (101) to another OLT (120) configured to connect to the one or more ONTs (301-303), so as to form a failover link (102);
- retrieve (503) one or more Layer 2 VLAN services associated to one or more failed network services provided by the active link;
- deactivate the active link; and
- send, to the AGG network (400) via the network-side port (113), the one or more Layer 2 VLAN services and a control message comprising a command for triggering a deletion of a switching information associated to the one or more Layer 2 VLAN services in the AGG network (400);
and wherein the OLT (120) is configured to communicate with the AGG network (400) through a Layer 2 Standard Control Protocol, L2CP, and wherein the command triggers, in the AGG network (400), flushing of the filtering database, FDB, of the corresponding Layer 2 services, L2S so that the failed one or more network services resume on the failover link.

9. The optical line terminal according to claim 8, wherein the OLT (110) is configured to operate according to at least a Multi-Protocol Label Switching, MPLS, protocol and wherein the control message is a Label Distribution Protocol, LDP, or a Border Gateway Protocol, BGP, and wherein the control message triggers, in the AGG network (400), flushing of the filtering database, FDB, of the corresponding service instances so that the failed one or more network services resume on the failover link.

10. A passive optical network, PON, 100, comprising an optical line terminal, OLT, (110), according to any of claims 1 to 7.

11. A method comprising:
- receiving, from an active optical line terminal, OLT, (110), information of a failure of an active link (101) formed between one or more optical network terminals, ONTs, (301-303) and the active OLT (110) in a passive optical network, PON, 100;
- forwarding the information to a failover OLT (120) to notify the failover OLT (120) to activate a failover link (102) formed between the ONTs (301-303) and the failover OLT (120);
- retrieving one or more Layer 2 VLAN services corresponding to one or more failed network services provided by the active link; and
- sending, to the AGG network (400), the one or more Layer 2 VLAN services and a control message comprising a command for triggering a deletion of a switching information associated to the one or more Layer 2 VLAN services in the AGG network (400), thereby performing a switchover;
and wherein the OLT (120) communicates with the AGG network (400) through a Layer 2 Standard Control Protocol, L2CP, and wherein the command triggers, in the AGG network (400), flushing of the filtering database, FDB, of the corresponding Layer 2 services, L2S so that the failed one or more network services resume on the failover link.

12. A controller (160) comprising:
- a first interconnection port configured to connect the controller (160) to an active optical line terminal, OLT, (110) according to claim 8 so as to form a first control link (161) between the controller (160) and the OLT (110);
- a second interconnection port configured to connect the controller (160) to a failover OLT (120) according to claim 1 so as to form a second control link (162); and
- at least one processor and at least one memory including a computer program code, the at least one memory and the computer program code configured to, with the at least one processor, cause the controller (160) at least to perform:
- receiving, from the active OLT (110), information of a failure of an active link (101) formed between one or more optical network terminals, ONTs, (301-303) and the active OLT (110) in a passive optical network, PON, (100);
- forwarding the information to a failover OLT (120) to notify the failover OLT (120) to activate a failover link (102) formed between the ONTs (301-303) and the failover OLT (120);
thereby performing a switchover.

13. A passive optical network, PON, 100, comprising a controller (160) according to claim 12.

## Patentansprüche

1. Optisches Leitungsendgerät, OLT, (120), das Folgendes umfasst:
- einen netzwerkseitigen Anschluss (123), der dazu ausgelegt ist, mit einem stromaufwärtigen Aggregations(AGG)-Netzwerk (400) verbunden zu sein, um zwischen dem OLT (120) und dem AGG-Netzwerk (400) einen Dienstkanal (104) zu bilden;
- einen passiven optischen Netzwerk(PON)-Anschluss (121), der dazu ausgelegt ist, mit einem oder mehreren optischen Netzwerkendgeräten, ONTs, (301-303) verbunden zu sein, um zwischen den ONTs (301-303) und dem OLT (120) einen Failoverlink (102) zu bilden; und
- mindestens einen Prozessor und mindestens einen Speicher, der einen Computerprogrammcode beinhaltet, wobei der mindestens eine Speicher und der Computerprogrammcode dazu ausgelegt sind, das OLT (120) mit dem mindestens einen Prozessor zu veranlassen, mindestens Folgendes durchzuführen:
- Empfangen von Informationen über einen Ausfall eines aktiven Links (101) zwischen den ONTs (301-303) und einem anderen OLT (110);
- Abrufen von einem oder mehreren Schicht-2-VLAN-Diensten, L2S, die einem oder mehreren ausgefallenen Netzwerkdiensten entsprechen, die vom aktiven Link bereitgestellt werden;
- Aktivieren des Failoverlinks; und
- Senden des einen oder der mehreren Schicht-2-VLAN-Dienste und einer Steuernachricht, die einen Befehl zum Auslösen einer Löschung von Umschaltinformationen umfasst, die mit dem einen oder den mehreren Schicht-2-VLAN-Diensten im AGG-Netzwerk (400) verknüpft sind, via den netzwerkseitigen Anschluss (123) an das AGG-Netzwerk (400);
und wobei das OLT (120) dazu ausgelegt ist, über ein Schicht-2-Standardsteuerprotokoll, L2CP, mit dem AGG-Netzwerk (400) zu kommunizieren, und wobei der Befehl im AGG-Netzwerk (400) das Entleeren der Filterdatenbank, FDB, der entsprechenden Schicht-2-Dienste, L2S, auslöst, derart, dass der eine oder die mehreren ausgefallenen Netzwerkdienste auf dem Failoverlink wiederaufgenommen werden.

2. Optisches Leitungsendgerät nach Anspruch 1, das ferner einen Verbindungsanschluss (122) umfasst, der dazu ausgelegt ist, mit einem anderen OLT (110) verbunden zu sein, um einen Steuerlink (105) zwischen dem OLT (120) und dem weiteren OLT (110) zu bilden, wobei das OLT vor dem Empfangen der Informationen dazu ausgelegt ist, via den Steuerlink (105) mindestens einen oder mehrere aktive Schicht-2-VLAN-Dienste, die dem einen oder den mehreren aktiven Netzwerkdiensten entsprechen, die vom aktiven Link (101) bereitgestellt werden, und Umschaltinformationen, die mit dem einen oder den mehreren aktiven Schicht-2-VLAN-Diensten verknüpft sind, zu empfangen.

3. Optisches Leitungsendgerät nach Anspruch 2, wobei der mindestens eine Speicher dazu ausgelegt ist, die empfangenen aktiven Schicht-2-VLAN-Dienste und die verknüpften Umschaltinformationen vom weiteren OLT (110) zu speichern, und wobei der mindestens eine Prozessor angeordnet ist, den einen oder die mehreren Schicht-2-VLAN-Dienste, die dem einen oder den mehreren ausgefallenen Netzwerkdiensten entsprechen, die vom aktiven Link bereitgestellt werden, aus dem mindestens einen Speicher abzurufen.

4. Optisches Leitungsendgerät nach Anspruch 1, wobei das OLT (120) dazu ausgelegt ist, gemäß mindestens einem Ethernet-Ring-Protection-Switching(ERPS)-Protokoll betrieben zu werden, und wobei die Nachricht eine Ring-Automatic-Protection-Switching(R-APS)-Steuernachricht ist.

5. Optisches Leitungsendgerät nach einem der vorhergehenden Ansprüche, wobei der mindestens eine Prozessor ferner angeordnet ist, einen Befehl zum Auslösen einer Löschung der Umschaltinformationen, die mit dem einen oder den mehreren Schicht-2-VLAN-Diensten im OLT (120) verknüpft sind, auszugeben.

6. Optisches Leitungsendgerät nach einem der vorhergehenden Ansprüche, wobei das AGG-Netzwerk (400) eine aktive und eine Failover-AGG-Vorrichtungen (401; 402) umfasst, wobei der aktive Link von der aktiven AGG-Vorrichtung (401) und der Failover-AGG-Vorrichtung (402) bedient wird, und wobei das OLT (120) dazu ausgelegt ist, den einen oder die mehreren Schicht-2-VLAN-Dienste und die Steuernachricht mindestens an die aktive AGG-Vorrichtung (401) oder an beide AGG-Vorrichtungen (401; 402) zu senden.

7. Optisches Leitungsendgerät nach Anspruch 6, das ferner einen zusätzlichen netzwerkseitigen Anschluss umfasst, wobei der netzwerkseitige Anschluss (123) dazu ausgelegt ist, das OLT (120) mit der aktiven AGG-Vorrichtung (401) zu verbinden, und wobei der zusätzliche netzwerkseitige Anschluss dazu ausgelegt ist, das OLT (120) mit der Failover-AGG-Vorrichtung (402) zu verbinden.

8. Optisches Leitungsendgerät, OLT, (110), das Folgendes umfasst:
- einen netzwerkseitigen Anschluss (113), der dazu ausgelegt ist, mit einem stromaufwärtigen Aggregations(AGG)-Netzwerk (400) verbunden zu sein, um zwischen dem OLT (110) und dem AGG-Netzwerk (400) einen Dienstkanal (103) zu bilden;
- einen passiven optischen Netzwerk(PON)-Anschluss (111), der dazu ausgelegt ist, mit einem oder mehreren optischen Netzwerkendgeräten, ONTs, (301-303) verbunden zu sein, um zwischen den ONTs (301-303) und dem OLT (110) einen aktiven Link (101) zu bilden; und
- mindestens einen Prozessor und mindestens einen Speicher, der einen Computerprogrammcode beinhaltet, wobei der mindestens eine Speicher und der Computerprogrammcode dazu ausgelegt sind, das OLT (110) mit dem mindestens einen Prozessor zu veranlassen, mindestens Folgendes durchzuführen:
- Senden von Informationen eines Ausfalls eines aktiven Links (101) an ein anderes OLT (120), das dazu ausgelegt ist, mit dem einen oder den mehreren ONTs (301-303) verbunden zu sein, um einen Failoverlink (102) zu bilden;
- Abrufen (503) von einem oder mehreren Schicht-2-VLAN-Diensten, die mit einem oder mehreren ausgefallenen Netzwerkdiensten verknüpft sind, die vom aktiven Link bereitgestellt werden;
- Deaktivieren des aktiven Links; und
- Senden des einen oder der mehreren Schicht-2-VLAN-Dienste und einer Steuernachricht, die einen Befehl zum Auslösen einer Löschung von Umschaltinformationen umfasst, die mit dem einen oder den mehreren Schicht-2-VLAN-Diensten im AGG-Netzwerk (400) verknüpft sind, via den netzwerkseitigen Anschluss (113) an das AGG-Netzwerk (400);
und wobei das OLT (120) dazu ausgelegt ist, über ein Schicht-2-Standardsteuerprotokoll, L2CP, mit dem AGG-Netzwerk (400) zu kommunizieren, und wobei der Befehl im AGG-Netzwerk (400) das Entleeren der Filterdatenbank, FDB, der entsprechenden Schicht-2-Dienste, L2S, auslöst, derart, dass der eine oder die mehreren ausgefallenen Netzwerkdienste auf dem Failoverlink wiederaufgenommen werden.

9. Optisches Leitungsendgerät nach Anspruch 8, wobei das OLT (110) dazu ausgelegt ist, gemäß mindestens einem Multi-Protocol-Label-Switching(MPLS)-Protokoll betrieben zu werden, und wobei die Steuernachricht ein Label-Distribution-Protocol, LDP, oder ein Border-Gateway-Protocol, BGP, ist, und wobei die Steuernachricht im AGG-Netzwerk (400) das Entleeren der Filterdatenbank, FDB, der entsprechenden Dienstinstanzen auslöst, derart, dass der eine oder die mehreren ausgefallenen Netzwerkdienste auf dem Failoverlink wiederaufgenommen werden.

10. Passives optisches Netzwerk, PON, 100, das ein optisches Leitungsendgerät, OLT, (110) nach einem der Ansprüche 1 bis 7 umfasst.

11. Verfahren, das Folgendes umfasst:
- Empfangen von Informationen über einen Ausfall eines aktiven Links (101), der zwischen einem oder mehreren optischen Netzwerkendgeräten, ONTs, (301-303) und dem aktiven OLT (110) in einem passiven optischen Netzwerk, PON, 100 gebildet ist, von einem aktiven optischen Leitungsendgerät, OLT, (110);
- Weiterleiten der Informationen zu einem Failover-OLT (120), um das Failover-OLT (120) zu benachrichtigen, einen zwischen den ONTs (301-303) und dem Failover-OLT (120) gebildeten Failoverlink (102) zu aktivieren;
- Abrufen von einem oder mehreren Schicht-2-VLAN-Diensten, die einem oder mehreren ausgefallenen Netzwerkdiensten entsprechen, die vom aktiven Link bereitgestellt werden; und
- Senden des einen oder der mehreren Schicht-2-VLAN-Dienste und einer Steuernachricht, die einen Befehl zum Auslösen einer Löschung von Umschaltinformationen umfasst, die mit dem einen oder den mehreren Schicht-2-VLAN-Diensten im AGG-Netzwerk (400) verknüpft sind, an das AGG-Netzwerk (400), dadurch Durchführen einer Umschaltung;
und wobei das OLT (120) über ein Schicht-2-Standardsteuerprotokoll, L2CP, mit dem AGG-Netzwerk (400) kommuniziert, und wobei der Befehl im AGG-Netzwerk (400) das Entleeren der Filterdatenbank, FDB, der entsprechenden Schicht-2-Dienste, L2S, auslöst, derart, dass der eine oder die mehreren ausgefallenen Netzwerkdienste auf dem Failoverlink wiederaufgenommen werden.

12. Steuerung (160), die Folgendes umfasst:
- einen ersten Verbindungsanschluss, der dazu ausgelegt ist, die Steuerung (160) mit einem aktiven optischen Leitungsendgerät, OLT, (110) nach Anspruch 8 zu verbinden, um zwischen der Steuerung (160) und dem OLT (110) einen ersten Steuerlink (161) zu bilden;
- einen zweiten Verbindungsanschluss, der dazu ausgelegt ist, die Steuerung (160) mit einem Failover-OLT (120) nach Anspruch 1 zu verbinden, um einen zweiten Steuerlink (162) zu bilden; und
- mindestens einen Prozessor und mindestens einen Speicher, der einen Computerprogrammcode beinhaltet, wobei der mindestens eine Speicher und der Computerprogrammcode dazu ausgelegt sind, die Steuerung (160) mit dem mindestens einen Prozessor zu veranlassen, mindestens Folgendes durchzuführen:
- Empfangen von Informationen über einen Ausfall eines aktiven Links (101), der zwischen einem oder mehreren optischen Netzwerkendgeräten, ONTs, (301-303) und dem aktiven OLT (110) in einem passiven optischen Netzwerk, PON, (100) gebildet ist, vom aktiven OLT (110);
- Weiterleiten der Informationen zu einem Failover-OLT (120), um das Failover-OLT (120) zu benachrichtigen, einen zwischen den ONTs (301-303) und dem Failover-OLT (120) gebildeten Failoverlink (102) zu aktivieren;
dadurch Durchführen einer Umschaltung.

13. Passives optisches Netzwerk, PON, 100, das eine Steuerung (160) nach Anspruch 12 umfasst.

## Revendications

1. Terminal de ligne optique, OLT, (120) comprenant :
- un port côté réseau (123) configuré pour se connecter à un réseau d'agrégation en amont, AGG, (400), de manière à former un canal de service (104) entre l'OLT (120) et le réseau AGG (400) ;
- un port de réseau optique passif, PON, (121), configuré pour se connecter à un ou plusieurs terminaux de réseau optique, ONT, (301-303), de manière à former une liaison de basculement (102) entre les ONT (301-303) et l'OLT (120) ; et
- au moins un processeur et au moins une mémoire comportant un code de programme informatique, l'au moins une mémoire et le code de programme informatique étant configurés pour, avec l'au moins un processeur, amener l'OLT (120) à effectuer au moins ce qui suit :
- recevoir des informations sur une défaillance d'une liaison active (101) entre les ONT (301 -303) et un autre OLT (110) ;
- récupérer un ou plusieurs services VLAN de couche 2, L2S, correspondant à un ou plusieurs services réseau défaillants fournis par la liaison active ;
- activer la liaison de basculement ; et
- envoyer, au réseau AGG (400) via le port côté réseau (123), les un ou plusieurs services VLAN de couche 2 et un message de contrôle comprenant une commande pour déclencher la suppression d'informations de commutation associées aux un ou plusieurs services VLAN de couche 2 dans le réseau AGG (400) ;
et dans lequel l'OLT (120) est configuré pour communiquer avec le réseau AGG (400) par l'intermédiaire d'un protocole de contrôle standard de couche 2, L2CP, et dans lequel la commande déclenche, dans le réseau AGG (400), le vidage de la base de données de filtrage, FDB, des services de couche 2, L2S correspondants, de sorte que les un ou plusieurs services réseau défaillants reprennent sur la liaison de basculement.

2. Terminal de ligne optique selon la revendication 1, comprenant en outre un port d'interconnexion (122) configuré pour se connecter à l'autre OLT (110) de manière à former une liaison de contrôle (105) entre l'OLT (120) et l'autre OLT (110), dans lequel, avant de recevoir les informations, l'OLT est configuré pour recevoir, via la liaison de contrôle (105), au moins un ou plusieurs services VLAN de couche 2 actifs correspondant aux un ou plusieurs services réseau actifs fournis par la liaison active (101) et des informations de commutation associées aux un ou plusieurs services VLAN de couche 2 actifs.

3. Terminal de ligne optique selon la revendication 2, dans lequel l'au moins une mémoire est configurée pour stocker les services VLAN de couche 2 actifs reçus et les informations de commutation associées en provenance de l'autre OLT (110), et dans lequel l'au moins un processeur est conçu pour récupérer dans l'au moins une mémoire les un ou plusieurs services VLAN de couche 2 correspondant aux un ou plusieurs services réseau défaillants fournis par la liaison active.

4. Terminal de ligne optique selon la revendication 1, dans lequel l'OLT (120) est configuré pour fonctionner selon au moins un protocole de commutation de protection en anneau Ethernet, ERPS, et dans lequel le message est un message de contrôle de commutation de protection automatique en anneau, R-APS.

5. Terminal de ligne optique selon l'une des revendications précédentes, dans lequel l'au moins un processeur est en outre conçu pour émettre une commande afin de déclencher la suppression des informations de commutation associées aux un ou plusieurs services VLAN de couche 2 dans l'OLT (120).

6. Terminal de ligne optique selon l'une des revendications précédentes, dans lequel le réseau AGG (400) comprend un dispositif AGG actif et un dispositif AGG de basculement (401; 402), dans lequel la liaison active est desservie par le dispositif AGG actif (401) et le dispositif AGG de basculement (402), et dans lequel l'OLT (120) est configuré pour envoyer au moins au dispositif AGG actif (401) ou aux deux dispositifs AGG (401 ; 402) les un ou plusieurs services VLAN de couche 2 et le message de contrôle.

7. Terminal de ligne optique selon la revendication 6, comprenant en outre un port côté réseau supplémentaire, dans lequel le port côté réseau (123) est configuré pour connecter l'OLT (120) au dispositif AGG actif (401), et, dans lequel le port côté réseau supplémentaire est configuré pour connecter l'OLT (120) au dispositif AGG de basculement (402).

8. Terminal de ligne optique, OLT, (110) comprenant :
- un port côté réseau (113) configuré pour se connecter à un réseau d'agrégation en amont, AGG, (400), de manière à former un canal de service (103) entre l'OLT (110) et le réseau AGG (400) ;
- un port de réseau optique passif, PON, (111), configuré pour se connecter à un ou plusieurs terminaux de réseau optique, ONT, (301-303), de manière à former une liaison active (101) entre les ONT (301-303) et l'OLT (110) ; et
- au moins un processeur et au moins une mémoire comportant un code de programme informatique, l'au moins une mémoire et le code de programme informatique étant configurés pour, avec l'au moins un processeur, amener l'OLT (110) à effectuer au moins ce qui suit :
- envoyer des informations sur une défaillance d'une liaison active (101) à un autre OLT (120) configuré pour se connecter aux un ou plusieurs ONT (301-303), de manière à former une liaison de basculement (102) ;
- récupérer (503) un ou plusieurs services VLAN de couche 2 associés à un ou plusieurs services réseau défaillants fournis par la liaison active ;
- désactiver la liaison active ; et
- envoyer, au réseau AGG (400) via le port côté réseau (113), les un ou plusieurs services VLAN de couche 2 et un message de contrôle comprenant une commande pour déclencher la suppression d'informations de commutation associées aux un ou plusieurs services VLAN de couche 2 dans le réseau AGG (400) ;
et dans lequel l'OLT (120) est configuré pour communiquer avec le réseau AGG (400) par l'intermédiaire d'un protocole de contrôle standard de couche 2, L2CP, et dans lequel la commande déclenche, dans le réseau AGG (400), le vidage de la base de données de filtrage, FDB, des services de couche 2, L2S correspondants, de sorte que les un ou plusieurs services réseau défaillants reprennent sur la liaison de basculement.

9. Terminal de ligne optique selon la revendication 8, dans lequel l'OLT (110) est configuré pour fonctionner selon au moins un protocole de commutation multiprotocole par étiquette, MPLS, et dans lequel le message de contrôle est un protocole de distribution d'étiquettes, LDP, ou un protocole de passerelle frontalière, BGP, et dans lequel le message de contrôle déclenche, dans le réseau AGG (400), le vidage de la base de données de filtrage, FDB, des instances de service correspondantes, de sorte que les un ou plusieurs services réseau défaillants reprennent sur la liaison de basculement.

10. Réseau optique passif, PON, 100, comprenant un terminal de ligne optique, OLT, (110), selon l'une des revendications 1 à 7.

11. Procédé comprenant :
- la réception, en provenance d'un terminal de ligne optique, OLT, actif (110), d'informations sur une défaillance d'une liaison active (101) formée entre un ou plusieurs terminaux de réseau optique, ONT, (301-303) et l'OLT actif (110) dans un réseau optique passif, PON, (100) ;
- le transfert des informations à un OLT de basculement (120) pour notifier à l'OLT de basculement (120) d'activer une liaison de basculement (102) formée entre les ONT (301-303) et l'OLT de basculement (120) ;
- la récupération d'un ou plusieurs services VLAN de couche 2 correspondant à un ou plusieurs services réseau défaillants fournis par la liaison active ; et
- l'envoi, au réseau AGG (400), des un ou plusieurs services VLAN de couche 2 et un message de contrôle comprenant une commande pour déclencher la suppression d'informations de commutation associées aux un ou plusieurs services VLAN de couche 2 dans le réseau AGG (400),
ce qui permet d'effectuer une bascule ;
et dans lequel l'OLT (120) communique avec le réseau AGG (400) par l'intermédiaire d'un protocole de contrôle standard de couche 2, L2CP, et dans lequel la commande déclenche, dans le réseau AGG (400), le vidage de la base de données de filtrage, FDB, des services de couche 2, L2S correspondants, de sorte que les un ou plusieurs services réseau défaillants reprennent sur la liaison de basculement.

12. Contrôleur (160) comprenant :
- un premier port d'interconnexion configuré pour connecter le contrôleur (160) à un terminal de ligne optique, OLT, actif (110) selon la revendication 8, de manière à former une première liaison de contrôle (161) entre le contrôleur (160) et l'OLT (110) ;
- un deuxième port d'interconnexion configuré pour connecter le contrôleur (160) à un OLT de basculement (120) selon la revendication 1, de manière à former une deuxième liaison de contrôle (162) ; et
- au moins un processeur et au moins une mémoire comportant un code de programme informatique, l'au moins une mémoire et le code de programme informatique étant configurés pour, avec l'au moins un processeur, amener le contrôleur (160) à effectuer au moins ce qui suit :
- recevoir, en provenance de l'OLT actif (110), des informations sur une défaillance d'une liaison active (101) formée entre un ou plusieurs terminaux de réseau optique, ONT, (301- 303) et l'OLT actif (110) dans un réseau optique passif, PON, (100) ;
- transférer les informations à un OLT de basculement (120) pour notifier à l'OLT de basculement (120) d'activer une liaison de basculement (102) formée entre les ONT (301-303) et l'OLT de basculement (120) ;
ce qui permet d'effectuer une bascule.

13. Réseau optique passif, PON, (100), comprenant un contrôleur (160) selon la revendication 12.
